# EUROPÄISCHE PATENTSCHRIFT

(11) **EP 2 903 722 B1**
(45) Veröffentlichungstag und Bekanntmachung des Hinweises auf die Patenterteilung: **16.11.2016**
(21) Anmeldenummer: 13794792.5
(22) Anmeldetag: 07.10.2013
(51) Int. Cl.: B01D 53/86, C01B 17/765

(54) **VERFAHREN ZUR ZWEISTUFIGEN KATALYTISCHEN OXIDATION VON SCHWEFELVERBINDUNGEN IN FEUCHTEN GASEN**
METHOD FOR THE TWO-STAGE CATALYTIC OXIDATION OF SULPHUR COMPOUNDS IN WET GASES
PROCÉDÉ D'OXYDATION CATALYTIQUE À DEUX ÉTAGES DE COMPOSÉS DU SOUFRE DANS DES GAZ HUMIDES

(30) Priorität: 08.10.2012 AT 10822012
(43) Veröffentlichungstag der Anmeldung: 12.08.2015
(73) Patentinhaber: Kanzler, Walter, 8010 Graz (AT)
(72) Erfinder: Kanzler, Walter, 8010 Graz (AT)
(74) Vertreter: Wildhack & Jellinek
(86) Internationale Anmeldenummer: PCT/AT2013/050200
(87) Internationale Veröffentlichungsnummer: WO 2014/056013

(56) Entgegenhaltungen:
- EP-A1- 0 345 632
- DE-A1- 1 767 224
- DE-A1- 1 767 224
- DE-A1-102006 051 899

## Beschreibung

Abgase von Röstprozessen , Ofenabgasen in der Metallurgie , Sauergase u.a. enthalten oft Schwefelverbindungen, wie Schwefeldioxid, Schwefelwasserstoff, Schwefelkohlenstoff, Mercaptane u.a. in so hohen Konzentrationen, dass sich deren Abscheidung als Schwefelsäure und deren wirtschaftliche Nutzung rentiert.

*Die* DE 17 67 224 A1 *beschreibt ein Verfahren zur Oxydation des in Röstgasen oder Verbrennungsgasen enthaltenen Schwefeldioxyds an Katalysatoren und Absorption des dabei gebildeten Schwefeltrioxyds in Schwefelsäure, wobei das nach der Absorption verbleibende noch kleine Mengen Schwefeldioxyd enthaltende Restgas durch körnige, mit verdünnter Schwefelsäure berieselte Aktivkohle geleitet wird, und die aus der Aktivkohle ablaufende Schwefelsäure in die auf die katalytische Oxydation folgende Absorption von Schwefeltrioxyd geleitet wird.*

In den derzeit üblichen Verfahren wird *die eingangs genannte* Aufgabe dadurch gelöst, dass man die Abgase über Wärmetauschersysteme und mittels der Reaktionswärme auf die erforderliche Reaktionstemperatur von 300 bis 450 °C bringt, die Gase über einen oder mehrere Katalysatoren leitet und dabei Umsetzungsgrade bis zu 99 % erreicht.

Danach werden die Gase bis knapp über dem Taupunkt gekühlt (normalerweise 200 bis 260 °C), wobei sich das aus dem Schwefeldioxid gebildete Schwefeltrioxid bereits zu dampfförmiger Schwefelsäure umgesetzt hat und dieser Gasstrom wird dann in einem Glasrohrwärmetauscher auf 60 bis 100 °C direkt oder indirekt mit dem Rohgas abgekühlt. Die weitere Behandlung des Gases erfolgt in einem Aerosolabscheider.

Der Nachteil dieses Verfahrens besteht darin, dass
- einerseits die Glasrohrtauscher hohe Investitionskosten verursachen und durch Bruch von Glasrohren ein unsicheres Betriebsverhalten aufweisen und außerdem die maximale Eintrittstemperatur für die Glasrohre wegen deren Eindichtung mit PFA und PTFE Materialien mit 250 °C begrenzt ist,
- andererseits an den üblichen mit Vanadiumpentoxid dotierten Katalysatoren nur Umsetzungsgrade für Schwefeldioxid von ca. 99 % erreicht werden können.

Um heute übliche Konzentrationen des Schwefelsäure-Produktes von > 98 Gew.-% zu erreichen muss die Kondensationstemperatur mindestens 250 °C betragen, wodurch die relativ großen Glasrohrtauscher am Ende ihrer Belastbarkeit angelangt sind.

Weiters ergeben sich bei hohen Konzentrationen von Schwefelverbindungen in den Abgasen Taupunkte von 250 °C und mehr und damit wird das Temperaturfenster für den sicheren Betrieb der Anlage immer kleiner.

Andererseits sind die bereits weltweiten Anforderungen der Gesetzgebung so hoch, dass für Emissionskonzentrationen von Schwefeldioxid von 50 bis 100 mg/Nm³ ein Umsetzungsgrad von 99 % oft nicht mehr ausreichend ist.

Es muss daher zur Erhöhung des Umsatzes auf mehr als 99 % ein Verfahren gefunden werden, das diese oben genannten Nachteile vermeidet.

Es wurde schon vorgeschlagen, nach der Kondensation der Schwefelsäure eine zweite Oxidationsstufe mit einem Vanadiumpentoxid-Katalysator zu schalten. Dadurch steigen die Investitions- und Betriebs-Kosten für eine derartige Anlage wesentlich an.

Die Nachbehandlung der Gase nach der Kondensationsstufe kann auf verschiedenste Arten durchgeführt werden. Alkalische Wäscher verursachen Kosten für Neutralisationsmittel und Deponien und Peroxid-Wäscher verursachen erhebliche Betriebskosten.

Die Aufgabe lässt sich in zwei Teile trennen, nämlich
- Werkstoffe zu finden, die bei den hohen Säurekonzentrationen und den hohen Temperaturen beständig sind und
- eine zweite Stufe zur Nachoxidation zu finden, die bei niedrigen Temperaturen arbeitet und weder die Betriebskosten noch die Investitionskosten wesentlich erhöht.
Diese Aufgabe wird daher erfindungsgemäß dadurch gelöst,
- dass in einer ersten Stufe der überwiegende Teil der Schwefelkomponenten des Gasstromes, mit dem in demselben enthaltenen Sauerstoff in einem Reaktor mit Katalysator
umgesetzt wird, in einem Wärmetauscher von 380 bis 500 °C auf 250 bis 330 °C gekühlt wird,
- dass in einem Kondensationsturm K mit konzentrierter Schwefelsäure im Gegenstrom auf 60 bis 160 °C abgekühlt wird, wobei das Verhältnis zwischen Gasstrom und Schwefelsäure im Kondensationsturm K so gewählt bzw. eingestellt wird, dass die Schwefelsäure im Sumpf des Kondensationsturmes eine Temperatur von 220 bis 280 °C erreicht,
- dass der Wärmeinhalt des heißen Schwefelsäurestromes in zumindest einem Gegenstromwärmetauscher W1, W2 an ein Wärmeübertragungsmedium übertragen wird und dieses im Wärmetauscher W4 zur Vorwärmung des Rohgasstromes verwendet wird, während der abgekühlte Schwefelsäurestrom nach dem Gegenstromwärmetauscher wieder mittels Schwefelsäure-Pumpe P1 am Kopf des Kondensationsturms K aufgegeben wird und nur die jeweils auskondensierte Menge an konzentrierter Schwefelsäure aus dem System abgezogen wird, und
- dass danach der Gasstrom über eine Quenche Q und einen Aerosolabscheider F in eine zweite Stufe, bestehend aus einem Aktivkohlereaktor AR geleitet wird, in dem die nicht umgesetzten Schwefelkomponenten oxidiert und abgeschieden werden, wobei die Aktivkohle mit verdünnter Schwefelsäure regeneriert wird und die verdünnte Schwefelsäure aus der Aktivkohleregeneration in der Quenche Q zur Kühlung des Gasstromes auf 40 bis 60°C verwendet wird.

*Günstig ist es, wenn im Wärmetauscher von 430 bis 450°C auf 270 bis 290°C gekühlt wird.*

*Weiters kann es von Vorteil sein, wenn im Kondensationsturm auf 100 bis 140°C abgekühlt wird und wenn die Schwefelsäure in dessen Sumpf 250 bis 270°C erreicht.*

*Als Wärmeübertragungsmedium wird bevorzugt Thermoöl eingesetzt.*

Kondensationstürme für Schwefelsäure sind zwar schon seit vielen Jahrzehnten üblich, auch wurden die säurefesten keramischen Werkstoffe weiterentwickelt, so dass Steine und Kitte mit 70 bis 99 % SiO2-Anteil verfügbar sind. Die Säure im Sumpf musste jedoch immer bei niedrigen Temperaturen (unter 80 °C) ausgekoppelt werden, so dass diese bisher praktisch nicht zum Vorwärmen der Rohgase oder zur Energiegewinnung genutzt werden konnte.

Es musste also die Möglichkeit gefunden werden, druckbeständige Wärmetauscher und Pumpen herzustellen, die gegen Schwefelsäure mit 98 gew.-%iger Konzentration und Temperaturen von 250 bis 260 °C beständig sind.

Erfindungsgemäß kann diese Aufgabe nur durch den Einsatz von Siliziumcarbid-Werkstoffen erfüllt werden. Im Falle der Pumpen müssen dafür Lager und Dichtelemente entsprechend entwickelt werden.

Im Falle der Wärmetauscher gibt es zwar Rohrbündelwärmetauscher mit Siliziumcarbid-Rohren. Diese müssen aber auch mit PTFE/PFA gedichtet und /oder die Vorkammern ausgekleidet werden, so dass sie gegen Überdrücke und die erforderlichen Temperaturen nicht stabil genug sind.

Es wurde aber gefunden, dass gefügte Plattenwärmetauscher aus Siliziumcarbid diese Aufgabe ohne jedes weitere Problem erfüllen können.

Wenn man nun die Gasströme aus dem Reaktor z.B. auf 280 °C abkühlt und im Kondensationsturm so viel kühle Säure am Kopf aufgibt (ca. 50 % des Massestromes des durchströmendes Gases), dass am Sumpf eine Säureaustritts-Temperatur von z.B. 260 °C erreicht wird, wird die Säure auf > 98 Gew.-% aufkonzentriert und, wenn die Säure in einem ersten, kleineren Wärmetauscher im freien Zulauf auf < 250 °C abgekühlt wird, kann die Pumpe die Säure durch den Hauptteil des Wärmetauschers und in den Kopf des Kondensationsturmes pumpen.

Die Wärme kann an ein Wärmeträgermedium, wie z. B. Thermoöl, abgegeben werden und mit diesem in einem separaten Wärmetauscher auf das Rohgas übertragen werden.

Da die Kondensationswärme und die Reaktionswärme der Säurebildung bei der Abkühlung frei werden, ist die Wärmemenge, die an das Rohgas übertragen werden kann, immer geringer als die in der Rohgasvorwärmung verwertbare Wärme. Daher wird die Temperatur im Abgas nach dem Kondensationsturm je nach Gehalt an Schwefelgehalt des Rohgasstromes höher werden .

Dieser Energiegehalt des Gasstromes nach dem Kondensationsturm wird erfindungsgemäß zur Aufkonzentrierung der Dünnsäure aus der zweiten Reaktionsstufe mit Aktivkohle als Katalysator und Adsorbens genutzt. Der Aktivkohlekatalysator wird durch das abgeschiedene und zu Schwefelsäure oxidierte Schwefeldioxid belegt und muss periodisch mit Dünnsäure < 5 Gew.-% desorbiert werden.

Die Dünnsäure aus diesem Reaktor gelangt in die Quenche und wird dort aufkonzentriert und danach in den Säurekreislauf im Kondensationsturm am Kopf miteingespeist.

Es ist üblich, nach der Quenche einen Aerosolabscheider entweder in Form eines Kerzenfilters oder eines Nasselektrofilters einzubauen.

### Anwendungsbeispiel:

10000 kg/h eines Prozessgases mit einer Konzentration von 8 g/Nm³ an Schwefelwasserstoff, 10 Vol.-% Sauerstoff, Rest Kohlendioxid und Stickstoff werden durch ein Gebläse V1 mit 40 °C angesaugt und über den Wärmetauscher W4 auf 330 °C vorgewärmt und gelangen auf den Katalysator R1 , wo sich die Temperatur auf ca. 430 °C durch die Reaktionswärme erhöht und der Schwefelwasserstoff zu 99,9 % zu Schwefeldioxid umgesetzt wird und dieses zu 99 % Schwefeltrioxid.

Im Wärmetauscher W3 wird der Gasstrom von 430 °C auf 270 °C abgekühlt. Das Gas gelangt dann in den Kondensationsturm K, wo es von 270 °C auf 120 °C gekühlt wird und im Gegenstrom ca. 5000 kg/h 94 gew.-%ige Säure mit 100 °C am Kopf aufgegeben werden, die sich über die Kolonne auf 260 °C erwärmt und dabei auf 98 Gew.-% aufkonzentriert wird.

Die konzentrierte Säure tritt mit 260 °C in den Siliziumcarbid-Plattenwärmetauscher W1 ein und wird in diesem auf 220 °C abgekühlt, mit der Pumpe P1 durch den Plattenwärmetauscher W2 gefördert und dort auf 100 °C abgekühlt.

Die aus dem Gasstrom im Kondensationsturm abgeschiedene Säuremenge von ca. 183 kg/h wird als Produkt abgegeben, während die restlichen 4700 kg/h Schwefelsäure zusammen mit den 300 kg/h 5 gew.-%iger Dünnsäure, z.B. aus der Quenche Q, wieder am Kopf des Kondensationsturmes K aufgegeben werden. Zur Kühlung der Säure in den Wärmetauschern W1 und W2 dient das Thermoöl "Marlotherm S", das mit 60 °C in den Wärmetauscher W2 eintritt und im Gegenstrom im Wärmetauscher W1 bis auf 230 °C erhitzt wird, dann im Wärmetauscher W3 auf 350 °C erhitzt wird und die Wärme im Rippenrohrtauscher W4 an das Rohgas abgibt.

Das Abgas aus der ersten Oxidationsstufe, also insbesondere aus dem Kondensationsturm K, wird mit 120 °C in die Quenche Q geleitet, wo es mit der 5 gew.-%igen Dünnsäure aus der 2. Reaktionsstufe auf 50 °C gequencht wird.
In einer nachfolgenden Filterstufe F, die hier als Elektrofilter ausgeführt ist, werden die Aerosole abgeschieden und im nachfolgenden Aktivkohle-Reaktor R2 wird das Schwefeldioxid bis auf einen Restgehalt von 40 mg/Nm³ abgetrennt.

Die Regeneration der Aktivkohle erfolgt mit 5 gew.-%iger Dünnsäure periodisch jeweils im Abstand von 1 Stunde.

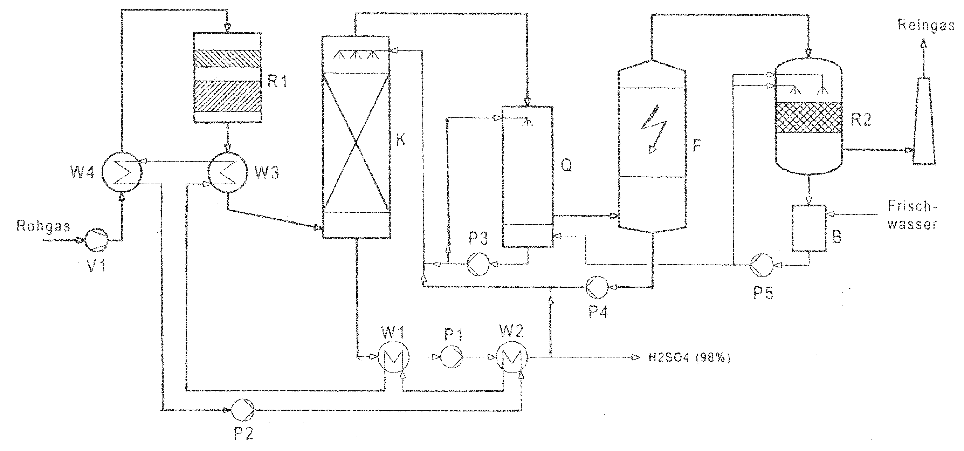

## Patentansprüche

1. Verfahren zur zweistufigen katalytischen Oxidation von Schwefel-Verbindungen in feuchten, sauerstoffhaltigen Gasen und Abgasen mit anschließender Abscheidung der gebildeten konzentrierten Schwefelsäure, wobei in einer ersten Stufe der überwiegende Teil der Schwefelkomponenten des Gasstromes mit dem in demselben enthaltenen Sauerstoff in einem Reaktor mit Katalysator (R1) umgesetzt wird, in einem Wärmetauscher (W3) von 380 bis 500°C auf 250 bis 330 °C gekühlt wird,
- dass der Gasstrom in einem Kondensationsturm (K) mit konzentrierter Schwefelsäure im Gegenstrom auf 60 bis 160 °C abgekühlt wird, wobei das Verhältnis zwischen Gasstrom und Schwefelsäure im Kondensationsturm (K) so gewählt bzw. eingestellt wird, dass die Schwefelsäure im Sumpf des Kondensationsturmes (K) eine Temperatur von 220 bis 280°C erreicht,
- dass der Wärmeinhalt des heißen Schwefelsäurestromes in zumindest einem Gegenstromwärmetauscher (W1,W2) an ein Wärmeübertragungsmedium übertragen wird und dieses im Wärmetauscher (W4) zur Vorwärmung des Rohgasstromes verwendet wird, während der abgekühlte Schwefelsäurestrom nach dem Gegenstromwärmetauscher (W1, W2) wieder mittels Schwefelsäure-Pumpe (P1) am Kopf des Kondensationsturms (K) aufgegeben wird und nur die jeweils auskondensierte Menge an konzentrierter Säure aus dem System abgezogen wird, und
- dass danach der Gasstrom über eine Quenche (Q) und einen Aerosolabscheider (F) in eine zweite Stufe , bestehend aus einem Aktivkohlereaktor (R2) geleitet wird, in dem die noch nicht umgesetzten Schwefelkomponenten oxidiert und abgeschieden werden, wobei die Aktivkohle mit verdünnter Schwefelsäure regeneriert wird und die verdünnte Schwefelsäure aus der Aktivkohleregeneration (R2) in der Quenche (Q) zur Kühlung des Gasstromes auf 40 bis 60 °C verwendet wird.

2. Vorrichtung zur Durchführung des Verfahrens nach Anspruch 1, wobei in der Vorrichtung
*(1) der Wärmeinhalt des heißen Schwefelsäurestromes in zumindest einem Gegenstromwärmetauscher (W1) an ein Wärmeübertragungsmedium übertragen wird und dieses im Wärmetauscher (W4) zur Vorwärmung des Rohgasstromes verwendet wird,*
*(2) der Gasstrom über eine Quenche (Q) und einen Aerosolabscheider (F) in eine zweite Stufe, bestehend aus einem Aktivkohlereaktor (R2) geleitet wird und*
*(3) die verdünnte Schwefelsäure aus der Aktivkohleregeneration (R2) in der Quenche (Q) zur Kühlung des Gasstromes verwendet wird, welche Vorrichtung* weiter aus Reaktor (R1), Wärmerückgewinnung (W1, W2, W3, W4), Kondensationsturm (K), Quenche (Q), Aerosolabscheider (F) sowie Aktivkohlereaktor (R2) *besteht und wobei* zumindest die mit der Schwefelsäure aus dem Kondensationsturm (K) in Kontakt kommenden Teile der (des) Gegenstromwärmetauscher(s) (W1, W2) aus Siliziumcarbid bestehen.

3. Vorrichtung nach Anspruch 2, **dadurch gekennzeichnet, dass** der Gegenstromwärmetauscher (W1, W2) aus mindestens zwei Wärmetauschern besteht, die in Serie geschaltet sind und die Schwefelsäure-Pumpe (P1) zur Umwälzung der konzentrierten Schwefelsäure nach dem Wärmetauscher (W1) in Strömungsrichtung geschaltet ist.

4. Vorrichtung nach Anspruch 2, **dadurch gekennzeichnet, dass** der/die Gegenstromwärmetauscher (W1, W2) als Plattenwärmetauscher ausgeführt sind.

## Claims

1. Method for two-stage catalytic oxidation of sulfur compounds in humid, oxygen-containing gases and waste gases with subsequent separation of the concentrated sulfuric acid so formed, wherein, in a first stage, the greater part of the sulfur components of the gas stream is reacted with oxygen contained in the same, in a reactor with catalyst (R1), and cooled in a heat exchanger (W3) from 380 to 500 °C to 250 to 330 °C,
- wherein the gas stream is cooled with concentrated sulfuric acid in countercurrent in a condensation tower (K) to 60 to 160 °C, wherein the ratio between the gas stream and the sulfuric acid in the condensation tower (K) is so selected or adjusted that the sulfuric acid in the bottom of the condensation tower (K) reaches a temperature of 220 to 280 °C,
- wherein the heat content of the hot sulfuric acid stream in at least one countercurrent heat exchanger (W1, W2) is transferred to a heat transfer medium and this is used in the heat exchanger (W4) to preheat the raw gas stream, while the cooled sulfuric acid stream is again abandoned at the top of the condensation tower (K) by means of a sulfuric acid pump (P1) after the countercurrent heat exchanger (W1, W2), and only the respectively condensed-out amount of concentrated acid is withdrawn from the system, and
- wherein the gas stream is then fed through a quench (Q) and an aerosol separator (F) in a second stage consisting of an activated carbon reactor (R2), in which the unreacted sulfur compounds are oxidized and separated, wherein the activated carbon is regenerated with diluted sulfuric acid, and wherein the diluted sulfuric acid from the activated carbon regeneration (R2) is used in the quench (Q) to cool the gas stream to 40 to 60 °C.

2. Device for implementing the method according to claim 1, wherein in the device
(1) the heat content of the hot sulfuric acid stream is transferred in at least one countercurrent heat exchanger (W1) to a heat transfer medium, and the latter is used in a heat exchanger (W4) to preheat the raw gas stream,
(2) the gas stream is fed through a quench (Q) and an aerosol separator (F) in a second stage consisting of an activated carbon reactor (R2), and
(3) the diluted sulfuric acid from the activated carbon regeneration (R2) is used in the quench (Q) to cool the gas stream, which device further comprises a reactor (R1), heat exchanger (W1, W2, W3, W4), a condensation tower (K), a quench (Q), an aerosol separator (F) as well as an activated carbon reactor (R2), and wherein at least the parts of the countercurrent heat exchanger(s) (W1, W2) coming into contact with the sulfuric acid from the condensation tower (K) are made of silicon carbide.

3. Device according to claim 2,
**characterized in that**
the countercurrent heat exchanger (W1, W2) comprises at least two heat exchangers, which are connected in series, while the sulfuric acid pump (P1) for circulating the concentrated sulfuric acid following the heat exchanger (W1) is connected in the direction of flow.

4. Device according to claim 2,
**characterized in that**
the countercurrent heat exchanger (W1, W2) is constructed as a plate heat exchanger.

## Revendications

1. Procédé d'oxydation catalytique à deux étages de composés du soufre dans des gaz et des effluents gazeux humides contenant de l'oxygène, suivie de la séparation de l'acide sulfurique concentré formé, dans lequel
- dans un premier étage, on fait réagir la majeure partie des composants soufrés du courant gazeux, dans un réacteur contenant un catalyseur (R1), avec l'oxygène contenu dans ledit réacteur et, dans un échangeur de chaleur (W3), on la refroidit d'une température allant de 380 à 500 °C à une température allant de 250 à 330 °C,
- dans une tour de condensation (K), on refroidit le courant gazeux contenant de l'acide sulfurique concentré à contre-courant à une température allant de 60 à 160 °C, le ratio entre le courant gazeux et l'acide sulfurique dans la tour de condensation (K) étant choisi ou ajusté de telle façon que l'acide sulfurique atteint au bas de la tour de condensation (K) une température allant de 220 à 280 °C,
- dans au moins un échangeur de chaleur à contre-courant (W1, W2), on transmet la capacité thermique du courant d'acide sulfurique chaud à un fluide caloporteur et on utilise ce dernier dans l'échangeur de chaleur (W4) pour préchauffer le courant de gaz brut, tandis que l'on réinjecte le courant d'acide sulfurique refroidi après l'échangeur de chaleur à contre-courant (W1, W2) au moyen d'une pompe d'acide sulfurique (P1) en tête de la tour de condensations (K) et on soutire du système uniquement la quantité respective d'acide concentré qui s'est condensée, et
- ensuite, on fait passer le courant gazeux, par le biais d'un dispositif de refroidissement brusque (Q) et d'un séparateur d'aérosol (F), dans un deuxième étage constitué d'un réacteur à charbon actif (R2) dans lequel les composants soufrés n'ayant pas encore réagi sont oxydés et séparés, on régénère le charbon actif avec de l'acide sulfurique dilué et on utilise l'acide sulfurique dilué provenant de la régénération du charbon actif (R2) dans le dispositif de refroidissement brusque (Q) pour refroidir le courant gazeux à une température de 40 à 60 °C.

2. Dispositif de mise en oeuvre du procédé selon la revendication 1, dans lequel dispositif
(1) dans au moins un échangeur de chaleur à contre-courant (W1), la capacité thermique du courant d'acide sulfurique chaud est transmise à un fluide caloporteur et ce dernier est utilisé dans l'échangeur de chaleur (W4) pour préchauffer le courant de gaz brut,
(2) le courant gazeux est amené par le biais d'un dispositif de refroidissement brusque (Q) et d'un séparateur d'aérosol (F) dans un deuxième étage constitué d'un réacteur à charbon actif (R2), et
(3) l'acide sulfurique dilué provenant de la régénération du charbon actif (R2) dans le dispositif de refroidissement brusque (Q) est utilisé pour refroidir le courant gazeux,
le dispositif étant en outre constitué du réacteur (R1), des récupérateurs de chaleur (W1, W2, W3, W4), de la tour de condensation (K), du dispositif de refroidissement brusque (Q), du séparateur d'aérosol (F) ainsi que du réacteur à charbon actif (R2) et au moins les parties du ou des échangeurs de chaleur à contre-courant (W1, W2) qui entrent en contact avec l'acide sulfurique provenant de la tour de condensation (K) sont constituées de carbure de silicium.

3. Dispositif selon la revendication 2, **caractérisé en ce que** l'échangeur de chaleur à contre-courant (W1, W2) est constitué d'au moins deux échangeurs de chaleur montés en série et **en ce que** la pompe à acide sulfurique (P1) servant à faire circuler l'acide sulfurique concentré est montée après l'échangeur de chaleur (W1) dans le sens d'écoulement.

4. Dispositif selon la revendication 2, **caractérisé en ce que** le ou les échangeurs de chaleur à contre-courant (W1, W2) sont réalisés sous la forme d'échangeurs de chaleur à plaques.
